# EUROPÄISCHE PATENTANMELDUNG

(11) **EP 1 315 344 A1**
(43) Veröffentlichungstag der Anmeldung: **28.05.2003**
(21) Anmeldenummer: 02360309.5
(22) Anmeldetag: 12.11.2002
(51) Int. Cl.: H04L 12/56, H04Q 7/38

(54) **Verfahren zum Aufbau einer direkten drahtlosen Telekommunikations (TK)-Verbindung**

(30) Priorität: 27.11.2001 DE 10157940
(71) Anmelder: ALCATEL, 75008 Paris (FR)
(72) Erfinder: Kaminski, Stephen, 73054 Eislingen (DE); Bakker, Hajo, 71735 Eberdingen (DE)
(74) Vertreter: Schultenkämper, Johannes

(57) **Zusammenfassung**

Bei einem Verfahren zum Aufbau einer Telekommunikations (=TK)-Verbindung zwischen einem ersten und einem zweiten Endgerät (12, 13) eines drahtlosen Telekommunikations (TK)-Netzwerks (11), von denen wenigstens eines mit einem dritten Endgerät (14) über eine Steuerungsverbindung (16 - 18) in Verbindung steht, wird der Aufbau einer direkten TK-Verbindung (19) zwischen dem ersten und zweiten Endgerät (12, 13) von dem dritten Endgerät (14) initiiert. Diese Maßnahme ermöglicht einen höheren Datendurchsatz im Netzwerk (11).

## Beschreibung

Die Erfindung betrifft ein Verfahren zum Aufbau einer Telekommunikations (TK)-Verbindung zwischen einem ersten und einem zweiten Endgerät eines drahtlosen Telekommunikations (TK)-Netzwerkes, von denen wenigstens eines mit einem dritten Endgerät über eine Steuerungsverbindung in Verbindung steht.

Im Stand der Technik ist es bekannt, in einem drahtlosen TK-Netzwerk, z.B. nach dem HiperLAN/2 Standard, zwei mobile Endgeräte (mobile terminal), wie zum Beispiel tragbare Rechner (Laptops), mit nur einem Eingabegerät, das als mobiles Eingabegerät (mobile input device) ausgebildet sein kann, wie beispielsweise einer Maus (mouse), zu bedienen. Beide Endgeräte halten eine Verbindung zu dem Eingabegerät. Wenn ein Objekt von dem einen Endgerät zu dem anderen Endgerät kopiert werden soll, werden die entsprechenden Daten zunächst zu dem Eingabegerät kopiert und dort gespeichert. Anschließend werden die Daten vom Eingabegerät zu dem anderen Endgerät gesendet. Durch diese Vorgehensweise ist das Kopieren von Daten von einem Endgerät zu einem anderen Endgerät relativ langsam. Der Aufbau der TK-Verbindung wird von einem der Endgeräte initiiert.

Aufgabe der vorliegenden Erfindung ist es daher, ein Verfahren zu entwickeln, das das Kopieren von Daten von einem ersten Endgerät zu einem zweiten Endgerät verbessert.

Gelöst wird diese Aufgabe erfindungsgemäß durch ein Verfahren der eingangs genannten Art, bei dem der Aufbau einer direkten TK-Verbindung zwischen dem ersten und dem zweiten Endgerät von dem dritten Endgerät initiiert wird.

Im Gegensatz zum Stand der Technik müssen die Daten nicht erst zum dritten Endgerät, das als Eingabegerät, z.B. als Maus, ausgebildet sein kann, und von dort wieder zum zweiten Endgerät übermittelt werden, sondern können die Daten direkt zwischen dem ersten und zweiten Endgerät ausgetauscht werden. Zwischen den Endgeräten (erstes und zweites) und dem dritten Endgerät müssen daher nur Steuerbefehle ausgetauscht werden. Die Endgeräte, die mobile Geräte sein können, können Teil eines drahtlosen TK-Netzwerks (wireless network) sein. Im Sinne der Erfindung wird unter einem drahtlosen TK-Netzwerk ein Netzwerk verstanden, bei dem der Datenaustausch zwischen den einzelnen Geräten nicht über Kabel sondern über Funk oder Infrarot oder eine andere geeignete kabellose Übertragung erfolgt. Das erfindungsgemäße Verfahren ermöglicht einen größeren Datendurchsatz in einem solchen Netzwerk, da die auszutauschenden bzw. zu kopierenden Daten nicht zweimal, sondern nur einmal übermittelt werden müssen. Außerdem ist der Kopiervorgang mit dem erfindungsgemäßen Verfahren deutlich schneller.

Bei einer bevorzugten Verfahrensvariante übermittelt das dritte Endgerät eine Verbindungsidentifizierung (connection identifier) an das erste und zweite Endgerät über die jeweilige Steuerungsverbindung. Die Verbindungsidentifizierung kann dem dritten Endgerät bekannt sein oder von diesem an anderer Stelle des TK-Netzwerks abgefragt worden sein. Durch die Übermittlung der Verbindungsidentifizierung wird die Verbindung zwischen dem ersten und zweiten Endgerät initiiert. Dies bedeutet, dass das Endgerät, von dem Daten kopiert werden sollen, das andere Endgerät direkt adressieren kann. Besonders vorteilhaft ist, dass die Verbindungsidentifizierung über die ohnehin vorhandenen Steuerungsverbindungen an das erste und zweite Endgerät übermittelt werden kann. Das Verfahren setzt voraus, dass die Endgeräte in einem TK-Netzwerk angemeldet und somit an sich bekannt sind, so dass zwischen dem ersten und zweiten Endgerät, die beide angemeldet sind, eine direkte TK-Verbindung aufgebaut werden kann.

Bei einer Verfahrensvariante kommunizieren das erste und zweite Endgerät über einen Zugangspunkt (access point) mit dem dritten Endgerät. Dies bedeutet, dass eine Verbindung zwischen jedem Endgerät und dem Zugangspunkt besteht. Eine Steuerungsverbindung setzt sich dann jeweils aus der Verbindung zwischen dem dritten Endgerät und dem Zugangspunkt und der Verbindung zwischen dem Zugangspunkt und dem jeweiligen anderen Endgerät (erstes oder zweites Endgerät) zusammen. Alternativ kann vorgesehen sein, dass von dem dritten Endgerät ausgehend jeweils eine direkte Steuerungsverbindung zum ersten und zweiten Endgerät besteht. Die Steuerungsverbindungen werden von dem Zugangspunkt koordiniert. Über einen Zugangspunkt kann sich ein Endgerät im TK-Netzwerk anmelden. Der Zugangspunkt kann die Datenkommunikation im TK-Netzwerk oder in Teilen davon steuern. So kann vorgesehen sein, dass das dritte Endgerät die Verbindungsidentifizierung für eine direkte TK-Verbindung zwischen zwei anderen Endgeräten vom Zugangspunkt anfordert. Dies bedeutet, dass der Zugangspunkt einer aufzubauenden direkten TK-Verbindung die Verbindungsidentifizierung zuordnet.

Bei einer bevorzugten Weiterbildung des Verfahrens baut der Zugangspunkt die direkte TK-Verbindung auf. Dabei wird der Aufbau der direkten TK-Verbindung zwischen dem ersten und zweiten Endgerät von dem dritten Endgerät initiiert, der eigentliche Aufbau der TK-Verbindung jedoch durch den Zugangspunkt durchgeführt. Wird ein Zugangspunkt verwendet, so ist es auch denkbar, dass der Zugangspunkt nur eine logische Verbindung zwischen dem ersten und zweiten Endgerät herstellt und die Objekte bzw. korrespondierenden Daten über eine physikalische Verbindung zunächst an den Zugangspunkt und von dort an das jeweils andere Endgerät übermittelt werden. Auch in diesem Fall findet eine Übermittlung der Daten an das dritte Endgerät jedenfalls nicht statt. Alternativ kann vorgesehen sein, dass das erste oder zweite Endgerät die direkte TK-Verbindung aufbaut.

In den Rahmen der Erfindung fällt auch ein drahtloses TK-Netzwerk mit mindestens einem ersten und zweiten Endgerät und mindestens einem dritten Endgerät, das mit dem ersten und zweiten Endgerät über Steuerungsverbindungen in Verbindung steht, zur Durchführung des erfindungsgemäßen Verfahrens. In einem derart beschaffenen TK-Netzwerk können Daten schneller und unter geringerer Belastung des TK-Netzwerks von einem ersten Endgerät auf ein zweites Endgerät kopiert oder transferiert werden. Insbesondere Kopierund Einfügevorgänge (cut and paste) können schneller und einfacher durchgeführt werden.

Wenn das TK-Netzwerk ein ad hoc Netzwerk ist, hat das TK-Netzwerk keine festgelegte Infrastruktur und können zusätzliche Endgeräte angemeldet werden. Ein solches TK-Netzwerk ist äußerst flexibel. Mittels des dritten Endgeräts können auch direkte Verbindungen zwischen bereits im TK-Netzwerk vorhandenen und neu im TK-Netzwerk angemeldeten Endgeräten initiiert werden.

Bei einer vorteilhaften Ausgestaltung des Netzwerks ist eines der Endgeräte ein Zugangspunkt. Durch diese Maßnahme erfolgt die Steuerung der Datenkommunikation im TK-Netzwerk von einem Endgerät aus und muss kein separater Zugangspunkt bereit gestellt werden.

Bei einer alternativen Ausgestaltung des Netzwerks ist eines der Endgeräte gleichzeitig ein Master Endgerät (master terminal), das die Datenkommunikation im TK-Netzwerk steuert.

In den Rahmen der Erfindung fällt auch ein Endgerät zur Durchführung des erfindungsgemäßen Verfahrens. Mit einem solchen Endgerät lassen sich Daten direkt an ein anderes Endgerät übermitteln, wobei die direkte drahtlose Verbindung durch ein drittes Endgerät, insbesondere ein Eingabegerät, initiiert wird.

Weiterhin fällt in den Rahmen der Erfindung ein Zugangspunkt zur Durchführung des erfindungsgemäßen Verfahrens. Insbesondere kann von einem Zugangspunkt die Verbindungsidentifizierung für die direkte drahtlose Verbindung erfragt werden bzw. kann die direkte drahtlose Verbindung durch den Zugangspunkt aufgebaut werden.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Die Erfindung ist in der Zeichnung schematisch dargestellt und wird anhand eines Ausführungsbeispiels naher erläutert. Es zeigt:
- **Fig. 1**: ein drahtloses ad hoc Netzwerk ohne Zugangspunkt; und
- **Fig. 2**: ein drahtloses Netzwerk mit Zugangspunkt.

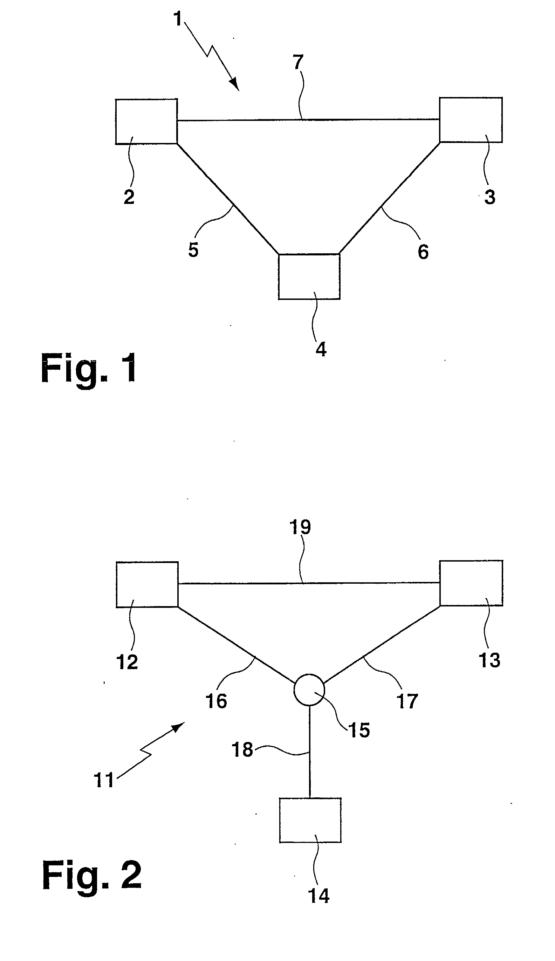

In der **Fig. 1** ist ein drahtloses TK-Netzwerk **1** schematisch dargestellt. Das TK-Netzwerk 1 umfasst ein erstes und ein zweites jeweils als mobiler Rechner (Laptop) ausgestaltetes Endgerät **2, 3**. Das erste und zweite Endgerät 2, 3 werden mittels eines als Maus (mouse) ausgebildeten dritten Endgeräts **4** bedient. Dazu besteht zwischen jedem Endgerät 2, 3 und dem dritten Endgerät 4 eine drahtlose Steuerverbindung **5, 6,** d.h. eine Funkverbindung. Das erste und zweite Endgerät 2, 3 und das dritte Endgerät 4 sind im TK-Netzwerk 1 angemeldet. Sollen Objekte von dem ersten Endgerät 2 zu dem zweiten Endgerät 3 übermittelt werden, insbesondere Daten, die auf einer Anzeigeeinheit des ersten Endgeräts 2 angezeigt werden auf die Anzeigeeinheit des zweiten Endgeräts 3 übertragen werden, z.B. durch Ausschneide,-/ Kopier- / Einfügefunktionen (cut/copy and paste) oder sog. drag und drop Funktionen, so initiiert das dritte Endgerät 4 den Aufbau einer direkten TK-Verbindung **7** zwischen dem ersten und zweiten Endgerät 2, 3, über die die Objekte bzw. die korrespondierenden Daten übermittelt werden können. Dazu sendet das dritte Endgerät 4 eine Verbindungsidentifizierung an das erste und zweite Endgerät 2, 3, so dass beispielsweise das erste Endgerät 2 das zweite Endgerät 3 direkt adressieren kann und die direkte TK-Verbindung 7 aufgebaut werden kann. Im Beispiel ist das erste Endgerät 2 als Master Endgerät ( master terminal) ausgebildet, das den Verbindungsaufbau ausführt.

**Fig. 2** zeigt ein TK-Netzwerk **11,** das ein erstes und ein zweites jeweils als mobiler Rechner (Laptop) ausgestaltetes Endgerät **12, 13** aufweist. Das erste und zweite Endgerät 12, 13 werden mittels eines als Maus (mouse) ausgebildeten dritten Endgeräts **14** bedient. Das dritte Endgerät 14 kommuniziert mit einem Zugangspunkt **15,** der wiederum mit dem ersten und zweiten Endgerät 12, 13 in Verbindung steht. Das erste Endgerät 12 steht somit über die Steuerungsverbindung **16, 18** und das zweite Endgerät 13 über die Steuerungsverbindung **17**, 18 mit dem dritten Endgerät 14 in Verbindung. Der Zugangspunkt 15 verwaltet und steuert die Kommunikation und den Datenaustausch im TK-Netzwerk 11. Sollen Objekte von dem ersten Endgerät 12 mittels des dritten Endgeräts 14 an das zweite Endgerät 13 übermittelt werden, so initiiert das dritte Endgerät 14 eine direkte TK-Verbindung **19** zwischen dem ersten und zweiten Endgerät 12, 13, indem es eine Verbindungsidentifikation bei dem Zugangspunkt 15 beantragt und diese Verbindungsidentifikation dem ersten und zweiten Endgerät 12, 13 mitteilt. Der Zugangspunkt 15 stellt daraufhin die direkte TK-Verbindung 19 her.

## Patentansprüche

1. Verfahren zum Aufbau einer Telekommunikations (=TK)-Verbindung zwischen einem ersten und einem zweiten Endgerät (2, 3; 12, 13) eines drahtlosen Telekommunikations (TK)-Netzwerks (1; 11), von denen wenigstens eines mit einem dritten Endgerät (4; 14) über eine Steuerungsverbindung (5, 6; 16 - 18) in Verbindung steht, **dadurch gekennzeichnet, dass** der Aufbau einer direkten TK-Verbindung (7; 19) zwischen dem ersten und zweiten Endgerät (2, 3; 12, 13) von dem dritten Endgerät (4; 14) initiiert wird.

2. Verfahren nach Anspruch 1, **dadurch gekennzeichnet, dass** das dritte Endgerät (4; 14) eine Verbindungsidentifizierung an das erste und zweite Endgerät (2, 3; 12, 13) über die jeweilige Steuerungsverbindung (5, 6; 16 - 18) übermittelt.

3. Verfahren nach Anspruch 1, **dadurch gekennzeichnet, dass** das erste und zweite Endgerät (12, 13) über einen Zugangspunkt (15) mit dem dritten Endgerät (14) kommunizieren.

4. Verfahren nach Anspruch 3, **dadurch gekennzeichnet, dass** der Zugangspunkt (15) die direkte TK-Verbindung (19) aufbaut.

5. Verfahren nach Anspruch 1, **dadurch gekennzeichnet, dass** das erste oder zweite Endgerät (2, 3; 12, 13) die direkte TK-Verbindung (7; 19) aufbaut.

6. Drahtloses TK-Netzwerk (1; 11) mit mindestens einem ersten und zweiten Endgerät (2, 3; 12, 13) und mindestens einem dritten Endgerät (4, 14), das mit dem ersten und zweiten Endgerät (2, 3; 12, 13) über Steuerungsverbindungen (5, 6; 16-18) in Verbindung steht, zur Durchführung des Verfahrens nach Anspruch 1.

7. TK-Netzwerk nach Anspruch 6, **dadurch gekennzeichnet, dass** das TK-Netzwerk (1) ein ad hoc Netzwerk ist.

8. TK-Netzwerk nach Anspruch 6, **dadurch gekennzeichnet, dass** eines der Endgeräte (12, 13, 14) ein Zugangspunkt ist.

9. TK-Netzwerk nach Anspruch 6, **dadurch gekennzeichnet, dass** eines der Endgeräte (2, 3, 4) gleichzeitig ein Master Endgerät ist, das die Datenkommunikation im TK-Netzwerk (1) steuert.

10. Endgerät (2, 3, 4; 12, 13, 14) zur Durchführung des Verfahrens nach Anspruch 1.

11. Zugangspunkt (15) zur Durchführung des Verfahrens nach Anspruch 3.
